# EUROPÄISCHE PATENTSCHRIFT

(11) **EP 2 442 953 B1**
(45) Veröffentlichungstag und Bekanntmachung des Hinweises auf die Patenterteilung: **20.03.2013**
(21) Anmeldenummer: 10770726.7
(22) Anmeldetag: 19.10.2010
(51) Int. Cl.: B27D 5/00, B29C 63/00, B29C 65/00, B29C 65/16, B23K 26/08, B23K 26/073, B23K 26/02

(54) **VORRICHTUNG UND VERFAHREN ZUR BEKANTUNG VON WERKSTÜCKEN**
DEVICE AND METHOD FOR EDGING WORKPIECES
DISPOSITIF ET PROCÉDÉ POUR BORDER DES PIÈCES

(30) Priorität: 27.10.2009 DE 102009050859
(43) Veröffentlichungstag der Anmeldung: 25.04.2012
(73) Patentinhaber: IMA Klessmann GmbH Holzbearbeitungssysteme, 32312 Lübbecke (DE)
(72) Erfinder: TAUBENRAUCH, Elmar, 27632 Misselwarden (DE)
(74) Vertreter: Schober, Mirko
(86) Internationale Anmeldenummer: PCT/EP2010/006379
(87) Internationale Veröffentlichungsnummer: WO 2011/054446

(56) Entgegenhaltungen:
- EP-A1- 1 163 864
- EP-A2- 1 800 813
- DE-C1- 4 429 913
- US-A- 5 948 172

## Beschreibung

### Technisches Gebiet

Die Erfindung betrifft eine Vorrichtung zur Bekantung von Werkstücken nach dem Oberbegriff des Anspruchs 1 und ein Verfahren zum Bekanten von Werkstücken nach dem Oberbegriff des Anspruch 7. Eine solche Vorrichtung und ein solches Verfahren sind aus der EP 1 800 812 A bekannt.

### Stand der Technik

Es sind z.B. aus EP 1 163 864 A1 oder EP 1 233 853 B1 Verfahren zur Bekantung von Werkstücken bekannt, bei denen ein Kantenband an das Werkstück zunächst herangeführt und dann mit diesem verbunden wird. Dabei bildet sich durch die Heranführung des Kantenbandes an das Werkstück ein Fügespalt aus. Im Bereich dieses Fügespalts wird eine Haftschicht oder haftvermittelnde Schicht (im Folgenden Haftschicht) durch Strahlung aktiviert, so dass sie ihre Haftwirkung entfalten kann.

Nach der Aktivierung der Haftschicht wird das Kantenband durch eine geeignete Andruckvorrichtung an das Werkstück gedrückt, wobei es durch die aktivierte Haftschicht zu einer dauerhaften Verbindung zwischen Werkstück und Kantenband kommt.

Da es aufgrund der beschränkten räumlichen Verhältnisse im Bereich des Fügespalts in der Regel nur möglich ist, die Strahlungsquelle so zu positionieren, dass der Strahl in einem spitzen Winkel auf das Kantenband trifft, ist diese Vorgehensweise mit dem Nachteil verbunden, dass ein maßgeblicher Teil der Strahlung von dem Kantenband reflektiert wird.

Dies hat zum einen den Nachteil eines verminderten Wirkungsgrades, da sich nur der absorbierte Anteil der Strahlung zur Aktivierung der Haftschicht nutzen lässt. Dieser muss durch eine mit Kosten verbundene Überdimensionierung der Strahlenquelle ausgeglichen werden. Zum anderen besteht der Nachteil, dass ein Teil der Strahlung unkontrolliert an die Umgebung abgegeben wird. Je nach verwendeter Strahlungsquelle kann dieser u.U. Schäden an Mensch und Material verursachen.

### Die Erfindung

Daher liegt der Erfindung die Aufgabe zugrunde, eine Vorrichtung und ein Verfahren der eingangs erwähnten Art anzugeben, bei denen die erwähnten Nachteile nicht auftreten.

Gelöst wird diese Aufgabe mit den Merkmalen der Ansprüche 1 und 7, vorteilhafte Ausführungsformen finden sich in den jeweiligen Unteransprüchen.

Erfindungsgemäß ist im Bereich des Fügespalts ein Medium vorgesehen, das eine höhere optische Dichte aufweist als das Medium, durch welches die Strahlung von der Strahlenquelle zum Kantenband geführt wird. Das Medium ist so angeordnet, dass die Ausbreitungsrichtung der Strahlung durch Brechung und/oder Re-flexion derart geändert wird, dass die Strahlung in einem steileren Winkel auf das Kantenband trifft.

Durch den steileren Winkel verringert sich der vom Kantenband reflektierte, nicht zur Aktivierung der Haftschicht nutzbare Anteil der Strahlung, und der vom Kantenband absorbierte, zur Aktivierung der Haftschicht nutzbare Anteil wird erhöht. Dadurch wird zum Einen der Wirkungsgrad in Bezug auf die zur Erzeugung der Strahlung aufzuwendende Energie erhöht und der Einsatz einer weniger leistungsfähigen und damit in der Regel kostengünstigeren Strahlungsquelle ermöglicht, zum Anderen wird die an die Umgebung (z.B. in den Maschinenraum) abgegebene Strahlung vermindert und somit die Sicherheit der Vorrichtung erhöht.

### Kurzbeschreibung der Zeichnungsabbildungen

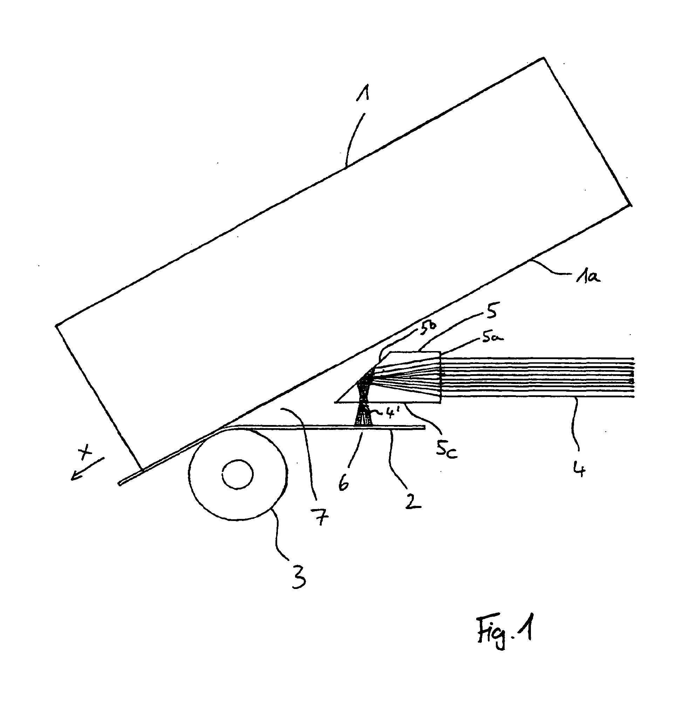

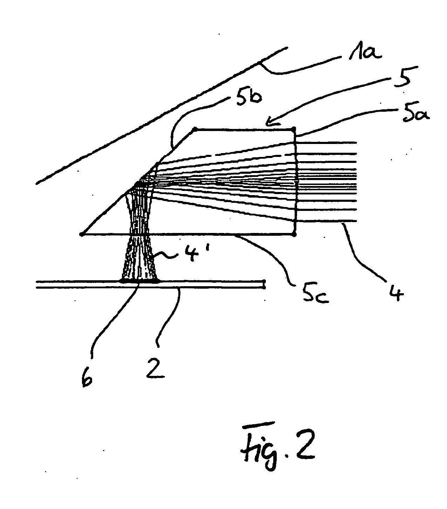

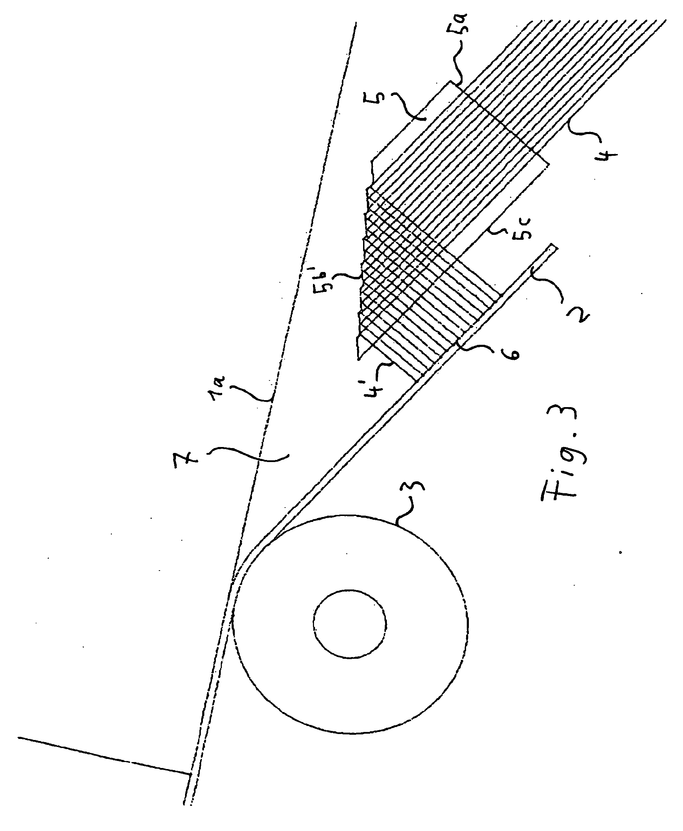

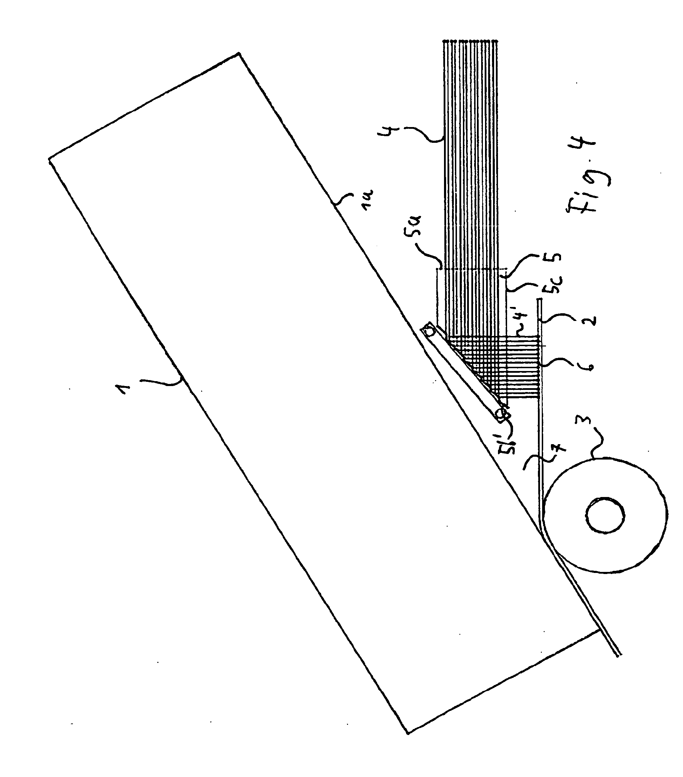

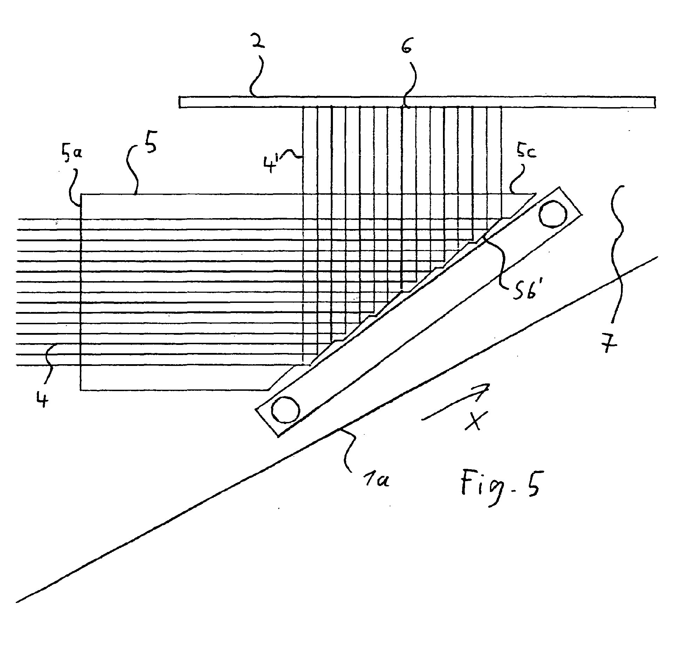

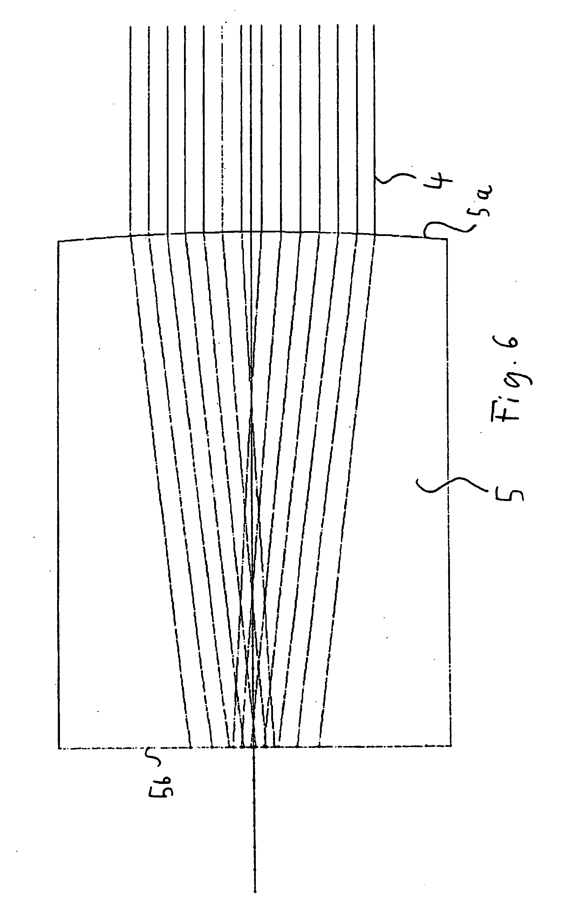

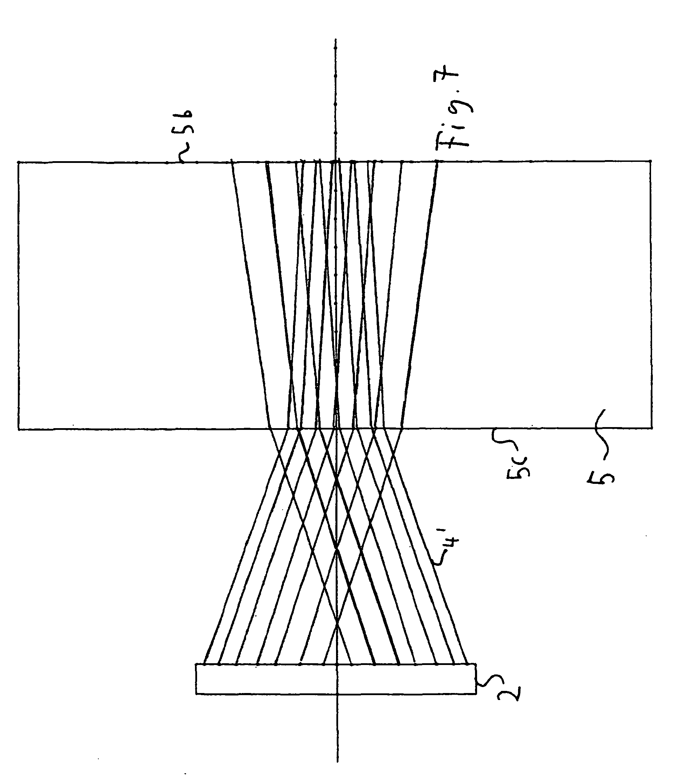

Die Erfindung wird nachfolgend anhand der Figuren 1 bis 7 schematisch näher erläutert.
Figur 1 zeigt eine schematische Draufsicht auf eine erfindungsgemäße Vorrichtung.
Figur 2 zeigt schematisch einen vergrößerten Ausschnitt der Vorrichtung aus Figur 1.
Figur 3 zeigt eine schematische Draufsicht auf eine erfindungsgemäße Vorrichtung in einer weiteren vorteilhaften Ausführungsform.
Figur 4 zeigt eine schematische Draufsicht auf eine erfindungsgemäße Vorrichtung in einer weiteren vorteilhaften Ausführungsform.
Figur 5 zeigt schematisch einen vergrößerten Ausschnitt der Vorrichtung aus Figur 4.
Figur 6 zeigt schematisch eine Schnittdarstellung des Mediums in einer vorteilhaften Ausführungsform senkrecht zur aus dem Medium austretenden Strahlung.
Figur 7 zeigt schematisch eine Schnittdarstellung des Mediums in einer vorteilhaften Ausführungsform senkrecht zur in das Medium eintretenden Strahlung.

### Weg zur Ausführung der Erfindung

Das Kantenband 2 wird der Andruckzone zugeführt und in dieser mit der Kante 1a des Werkstücks 1 verbunden. Der erforderliche Andruck wird durch eine Andruckvorrichtung 3, die bevorzugt eine Andruckrolle sein kann, aufgebracht. Bei der Heranführung des Kantenbandes an die Kante entsteht ein Fügespalt 7. In diesen reicht ein Medium 5 hinein, welches eine höhere optische Dichte als das besagtes Medium 5 umgebende Medium, welches vorteil-hafterweise die Umgebungsluft ist, aufweist. Das Medium 5 ist ein Prisma.

Die Strahlung 4, die von einer Strahlungsquelle, welche in einer bevorzugten Ausführungsform ein Laser ist, tritt in das Medium 5 durch die Eintrittsfläche 5a ein. In einer bevorzugten Ausführungsform ist die Fläche 5a derart gestaltet, dass die Strahlung bereits beim Eintritt in das Medium 5 gebrochen wird.

In vorteilhafter Weise wird die Richtungsänderung durch Reflexion der Strahlung durch eine Umlenkeinrichtung 5b, beispielsweise der Innenseite einer weiteren Oberfläche des Mediums 5, unterstützt. Diese Umlenkeinrichtung 5b kann in einer Variante aus mehreren Umlenkflächen 5b' bestehen. Vorteilhafte Ausführungsformen können eine oder eine Mehrzahl an Reflexionen der Strahlung oder eines Teils der Strahlung vor dem Wiederaustritt aus dem Medium 5 vorsehen. Zur Unterstützung des Reflexionsverhaltens auf die die Strahlung reflektierenden Umlenkflächen 5b' kann in vorteilhafter Weise eine Oberflächenbeschichtung aufgebracht werden, diese kann eine oder eine Mehrzahl Schichten aufweisen und bevorzugt eine Verspiegelung sein.

Die Strahlung 4' tritt aus dem Medium 5 durch die Oberfläche 5c aus. In bevorzugter Weise ist diese Oberfläche 5c so ausgeführt, dass die austretende Strahlung gebrochen wird.

In vorteilhafter Weise kann eine Kühlung des Mediums 5 oder eine Kühlung der Ein- und/oder Austrittsoberfläche 5a bzw. 5c der Strahlung 4 bzw. 4' vorgesehen sein. Ebenso kann vorteilhafterweise eine Kühlung für die Umlenkeinrichtung(en) 5b vorgesehen sein. Eine weitere vorteilhafte Ausführungsform sieht eine Einrichtung zum Schutz der optischen Flächen des Mediums 5, insbesondere der dem Kantenband 2 zugewandten optischen Flächen, vor Verunreinigungen vor. Bevorzugt können spezielle Luftdüsen, sog. Cross-Jets, zum Einsatz kommen. Vorteilhafterweise können die Kühl- und Schutzfunktion in einer geeigneten Einrichtung, insbesondere den besagten Cross-Jets, kombiniert werden.

Durch die erfahrene(n) Umlenkung(en) trifft die Strahlung 14' in einem steileren Winkel auf das Kantenband 2, als es ohne die erfahrenen Umlenkungen möglich wäre. Das Medium ist so angeordnet, dass die Strahlung 4' in einem Winkel zwischen 75° und 105° auf das Kantenband 2 trifft. Vorteilhafterweise trifft dabei wenigstens ein Teil der Strahlung 4' senkrecht auf das Kantenband 2.

Die Umlenkungen, die die Strahlung 4 erfährt, können in einer vorteilhaften Ausführung der Erfindung eine Umlenkung, Auffächerung und/oder Bündelung der Strahlung in mehr als einer Ebene vorsehen. Diese kann an der Eintrittsoberfläche 5a, der Austrittsoberfläche 5c und/ oder der Umlenkeinrichtung 5b stattfinden. Hierdurch ist es möglich, in der Auftreffzone 6 der Strahlung 4' auf das Kantenband 2 gezielt beliebige räumliche Intensitätsverteilungen sowohl in Transportrichtung des Kantenbandes 2 wie auch senkrecht zur Transportrichtung des Kantenbandes 2 zu erzielen. Hierdurch ist es beispielsweise möglich, ausgewählte Zonen des Kantenbandes 2, insbesondere die Ränder, einer höheren oder niedrigeren Strahlungsintensität oder -energie auszusetzen als andere.

## Patentansprüche

1. Vorrichtung zur Bekantung von Werkstücken (1) mit einem Kantenband (2), mit einer Strahlenquelle, einer Andruckeinrichtung (3) und einer Andruckzone, in deren Bereich das Kantenband (2) durch relative Bewegung von Werkstück (1) und Kantenband (2) an die Kante (1a) des Werkstücks (1) unter Bildung eines Fügespaltes (7) herangeführt und dann mittels der Andruckeinrichtung (3) angedrückt wird, wobei die aus der Strahlungsquelle durch ein erstes Medium in den Bereich des Fügespaltes (7) ausgestrahlte Strahlung (4) die Aktivierung einer Haftschicht oder haftvermittelnden Schicht bewirkt, mittels derer Kantenband (2) und Werkstück (1) verbunden werden, wobei der Strahlengang der Strahlung (4) im Bereich des Fügespaltes (7) vor dem Auftreffen der Strahlung (4) auf das Kantenband durch ein zweites gegenüber dem ersten Medium optisch dichteres Medium (5) verläuft,
**dadurch gekennzeichnet,**
**dass** das zweite Medium (5) ein Prisma umfasst, wobei das optisch dichtere Medium (5) so angeordnet ist, dass die aus diesem austretende Strahlung (4') auf das Kantenband in einem Winkel α von 75° < α < 105°, bevorzugt wenigstens teilweise senkrecht auftrifft.

2. Vorrichtung nach Anspruch 1,
**dadurch gekennzeichnet,**
**dass** die Strahlung (4) eine Laserstrahlung ist.

3. Vorrichtung nach einem der vorherigen Ansprüche,
**dadurch gekennzeichnet,**
**dass** das zweite Medium an der Eingangsseite (5a) der Strahlung (4) zur Strahlenbündelung ausgelegt ist.

4. Vorrichtung nach einem der vorherigen Ansprüche,
**dadurch gekennzeichnet,**
**dass** das zweite Medium (5) eine Umlenkeinrichtung (5b) zur Umlenkung der Strahlung (4) auf das Kantenband (2) aufweist.

5. Vorrichtung nach einem der vorherigen Ansprüche,
**dadurch gekennzeichnet,**
**dass** das zweite Medium (5) eine Umlenkeinrichtung (5b) mit einer Mehrzahl Umlenkflächen aufweist.

6. Vorrichtung nach einem der vorherigen Ansprüche,
**dadurch gekennzeichnet,**
**dass** eine Kühleinrichtung vorgesehen und so ausgelegt ist, dass sie das zweite Medium (5) wenigstens im Bereich (5a) des Eintritts der Strahlung (4) und/oder im Bereich (5c) des Austritts der Strahlung (4) gekühlt wird.

7. Verfahren zur Bekantung von Werkstücken (1) mit einem Kantenband (2), bei dem im Bereich einer Andruckzone das Kantenband (2) durch relative Bewegung von Werkstück (1) und Kantenband (2) an die Kante (1a) des Werkstücks (1) unter Bildung eines Fügespaltes (7) herangeführt und dann mittels einer Andruckeinrichtung (3) angedrückt wird, wobei eine aus einer Strahlungsquelle ausgestrahlte Strahlung (4) in den Bereich des Fügespaltes (7) durch ein erstes Medium geführt wird und dort die Aktivierung einer Haftschicht oder haftvermittelnden Schicht bewirkt, mittels derer Kantenband (2) und Werkstück (1) verbunden werden, wobei der Strahlengang der Strahlung (4) im Bereich des Fügespaltes (7) vor dem Auftreffen der Strahlung (4) auf das Kantenband durch ein zweites, gegenüber dem ersten Medium optisch dichteres Medium (5) geführt wird,
**dadurch gekennzeichnet,**
**dass** als zweites Medium (5) ein Prisma eingesetzt wird, wobei dass das optisch dichtere Medium (5) so angeordnet wird, dass die aus diesem austretende Strahlung (4') auf das Kantenband in einem Winkel α von 75° < α < 105°, bevorzugt wenigstens teilweise senkrecht auftrifft.

8. Verfahren nach Anspruch 7,
**dadurch gekennzeichnet,**
**dass** als Strahlung (4) eine Laserstrahlung eingesetzt wird.

9. Verfahren nach einem der Ansprüche 7 oder 8,
**dadurch gekennzeichnet,**
**dass** zweite Medium (5) wenigstens im Bereich (5a) des Eintritts der Strahlung (4) und/oder im Bereich (5c) des Austritts der Strahlung (4') gekühlt wird.

## Claims

1. Device for edging workpieces (1) with an edging strip (2), a radiation source, a contact pressure device (3) and a contact pressure zone in the area of which the edging strip (2) is brought through relative movement of the workpiece (1) and edging strip (2) up against the edge (1a) of the workpiece (1) whilst forming a joining gap (7) and is then pressed against same by means of the contact pressure device (3), wherein the radiation (4) which is ejected from the radiation source through a first medium into the area of the joining gap (7) causes the activation of an adhesive layer or adhesion-enhancing layer by means of which the edging strip (2) and workpiece (1) are connected, wherein the radiation path of the radiation (4) runs in the area of the joining gap (7) prior to the radiation (4) striking the edging strip through a second medium (5) which is optically more dense than the first medium, **characterised in that** the second medium (5) comprises a prism wherein the optically denser medium (5) is arranged so that the radiation (4') emerging from same strikes the edging strip at an angle α of 75° < α < 1 05°, preferably at least in parts at a right angle.

2. Device according to claim 1 **characterised in that** the radiation (4) is a laser beam.

3. Device according to one of the preceding claims **characterised in that** the second medium is designed on the input side (5a) of the radiation (4) for beam forming.

4. Device according to one of the preceding claims **characterised in that** the second medium (5) has a deflection device (5b) for deflecting the beam (4) to the edging strip (2).

5. Device according to one of the preceding claims **characterised in that** the second medium (5) has a deflection device (5b) with a plurality of deflection faces.

6. Device according to one of the preceding claims **characterised in that** a cooling device is provided and designed so that it cools the second medium (5) at least in the area (5a) of the entrance of the beam (4) and/or in the area (5c) of the exit of the beam (4).

7. Method for edging workpieces (1) with an edging strip (2) wherein in the area of a contact pressure zone the edging strip (2) is moved through relative movement of the workpiece (1) and edging strip (2) up against the edge (1a) of the workpiece (10 whilst forming a joining gap (7) and is then pressed against same by means of a contact pressure device (3) wherein radiation (4) emitted from a radiation source is guided into the area of the joining gap (7) through a first medium and causes there the activation of an adhesive layer or adhesion-enhancing layer, by means of which the edging strip (2) and workpiece (1) are connected together wherein the beam path of the radiation (4) is guided in the area of the joining gap (7) prior to the radiation (4) striking the edging strip through a second medium (5) which is more dense than the first medium, **characterised in that** a prism is used as the second medium (5) wherein the optically denser medium (5) is arranged so that the radiation (4') emerging from same strikes the edging strip at an angle α of 75° < α < 105°, preferably at least in parts at a right angle.

8. Method according to claim 7 **characterised in that** a laser beam is used as the radiation (4).

9. Method according to one of claims 7 or 8 **characterised in that** the second medium (5) is cooled at least in the area (5a) of the entrance of the radiation (4) and/or in the area (5c) of the exit of the radiation (4').

## Revendications

1. Dispositif pour border des pièces à traiter (1) avec une bande de chant (2), lequel comprend une source de rayonnement, un système de pression (3) et une zone de pression, dans laquelle la bande de chant (2) est amenée sur le chant (1a) de la pièces à traiter (1) par déplacement de la pièces à traiter (1) et de la bande de chant (2) l'une par rapport à l'autre, en formant une fente d'assemblage (7), et est alors pressée au moyen du système de pression (3), sachant que le faisceau (4) en provenance de la source de rayonnement et émis par un premier milieu dans la région de la fente d'assemblage (7), provoque l'activation d'une couche adhésive ou d'une couche assurant l'adhésion, au moyen de laquelle la bande de chant (2) et la pièce à traiter (1) sont assemblées, sachant que le passage pour le faisceau (4) passe dans la région de la fente d'assemblage (7), avant que le faisceau (4) frappe sur la bande de chant (2), par l'intermédiaire d'un deuxième milieu (5) optiquement plus dense que le premier milieu,
**caractérisé en ce que**
le deuxième milieu (5) comprend un prisme, sachant que le milieu (5), optiquement plus dense, est agencé de sorte que le faisceau (4'), sortant de celui-ci, frappe sur la bande de chant sous un angle α de 75° < α < 105 °, de préférence au moins partiellement perpendiculairement.

2. Dispositif selon la revendication 1, **caractérisé en ce que** le faisceau (4) est un faisceau laser.

3. Dispositif selon l'une des revendications précédentes, **caractérisé en ce que** le deuxième milieu est aménagé sur le côté (5a) de l'entrée pour le faisceau (4) pour concentrer le faisceau.

4. Dispositif selon l'une des revendications précédentes, **caractérisé en ce que** le deuxième milieu (5) est doté d'un dispositif de renvoi (5b) pour le renvoi du faisceau (4) sur la bande de chant (2).

5. Dispositif selon l'une des revendications précédentes, **caractérisé en ce que** le deuxième milieu (5) est doté d'un dispositif de renvoi (5b), qui présente une pluralité de surfaces de renvoi.

6. Dispositif selon l'une des revendications précédentes, **caractérisé en ce qu'**un système de refroidissement est prévu et est conçu de sorte que le deuxième milieu (5) soit refroidi au moins dans la région (5a) de l'entrée du faisceau (4) et / ou dans la région (5c) de la sortie du faisceau (4).

7. Procédé pour border des pièces (1) avec une bande de chant (2), dans lequel la bande de chant (2) est amenée au chant (1a) de la pièces à traiter (1) par mouvement relatif de la pièces à traiter (1) et de la bande de chant (2), en formant un fente d'assemblage (7) et est alors pressée au moyen du système de pression (3), sachant que le faisceau (4), en provenance de la source de rayonnement, est guidé par l'intermédiaire d'un premier milieu dans la région de la fente d'assemblage (7) et y provoque l'activation d'une couche adhésive ou d'une couche assurant l'adhésion, au moyen de laquelle la bande de chant (2) et la pièces à traiter (1) sont reliées ensemble, sachant que le passage pour le faisceau (4) sachant que le passage pour le faisceau (4) passe dans la région de la fente d'assemblage (7), avant que le faisceau (4) frappe sur la bande de chant par l'intermédiaire d'un deuxième milieu (5) optiquement plus dense que le premier milieu, **caractérisé en ce que**
l'on utilise, en tant que deuxième milieu (5), un prisme, sachant que le milieu (5), optiquement plus dense, est agencé de sorte que le faisceau (4'), sortant de celui-ci, frappe sur la bande de chant sous un angle α de 75 ° < α < 105 °, de préférence au moins partiellement perpendiculairement.

8. Procédé selon la revendication 7, **caractérisé en ce que** l'on utilise, en tant que faisceau (4), un faisceau laser.

9. Procédé selon l'une des revendications 7 ou 8, **caractérisé en ce que** le deuxième milieu (5) est refroidi au moins dans la région (5a) de l'entrée du faisceau (4) et / ou dans la région (5c) de la sortie du faisceau (4').
